# EUROPÄISCHE PATENTANMELDUNG

(11) **EP 4 756 651 A1**
(43) Veröffentlichungstag der Anmeldung: **10.06.2026**
(21) Anmeldenummer: 25221102.4
(22) Anmeldetag: 05.12.2025
(51) Int. Cl.: G06F 21/32

(54) **HYBRIDE IDENTIFIZIERUNG VON PERSONEN**

(30) Priorität: 05.12.2024 DE 102024136316
(71) Anmelder: Bundesrepublik Deutschland, vertreten durch das Bundesministerium des Innern, vertreten durch das Bundesamt für Sicherheit in der, 53175 Bonn (DE)
(72) Erfinder: MEINEL, Joanna, 53121 Bonn (DE); SCHNATTINGER, Thomas, 90513 Zirndorf (DE)
(74) Vertreter: Valvoda, Jakob

(57) **Zusammenfassung**

Die Offenbarung betrifft ein Identifizierungsverfahren, das ein Bereitstellen einer Zentraleinheit und einer örtlich getrennten Datenerfassungsvorrichtung aufweist. Die Datenerfassungsvorrichtung ist an die Zentraleinheit über einen vorzugsweise gesicherten Kommunikationskanal angebunden. Das Verfahren umfasst ein Initiieren einer Identifizierung einer Person durch die Datenerfassungsvorrichtung basierend auf einem Identifikationsdokument, das der Person zugeordnet ist, umfassend Erfassen von auf dem Identifikationsdokument hinterlegten Informationen durch die Datenerfassungsvorrichtung, Erfassen mindestens eines Merkmals der Person durch die Datenerfassungsvorrichtung und Bereitstellen einer Benutzeroberfläche zur Eingabe eines Prüfprotokolls. Die hinterlegten Informationen, das mindestens eine Merkmal der Person und das Prüfprotokoll werden über den Kommunikationskanal an die Zentraleinheit übertragen. Das Verfahren umfasst ferner ein Durchführen der Identifizierung der Person durch die Zentraleinheit, umfassend Prüfen der hinterlegten Informationen, des mindestens einen Merkmals der Person und des Prüfprotokolls, um ein Prüfergebnis mit einem Vertrauenswert zu erhalten und falls der Vertrauenswert unterhalb eines vorgegebenen Schwellwerts liegt, Initiieren einer Verifizierung des Prüfergebnisses, und Kommunizieren des Prüfergebnisses an eine Endvorrichtung. Ferner sind eine Vorrichtung und ein entsprechendes System offenbart.

## Beschreibung

Die vorliegende Offenbarung betrifft das verteilte Identifizieren von Personen. Insbesondere bezieht sich die vorliegende Offenbarung auf ein Identifizierungsverfahren, eine Vorrichtung und ein entsprechendes System, das eine Zentraleinheit und mehrere örtlich getrennte Datenerfassungsvorrichtungen umfasst, um die Identität einer Person basierend auf einem Identifikationsdokument und biometrischen Merkmalen zu überprüfen.

Bei der Identifizierung und Authentifizierung von Personen ist es üblich, die Identität einer Person durch Identifikationsdokumente wie bspw. Pässe, Führerscheine oder Personalausweise, zu prüfen, wobei die Identifikationsdokumente manuell oder maschinell überprüft werden. Diese Dokumente enthalten oft Informationen wie Namen, Geburtsdaten und biometrische Daten, die zur Identifizierung der Person verwendet werden können. Gemäß bekannten Verfahren werden diese Informationen entweder durch visuelle Inspektion oder durch maschinelles Auslesen der Dokumente überprüft. Trotz der Fortschritte bei der Dokumentenprüfung und der Verwendung von biometrischen Merkmalen wie Fingerabdrücken oder biometirischen Gesichtsmerkmalen für die Gesichtserkennung muss die Genauigkeit und Sicherheit derartiger Systeme stetig erhöht werden.

Bekannte Ansätze zur Identifizierung und Authentifizierung umfassen auch eine Verwendung von Datenbanken zur Speicherung von Identitätsdaten. Diese Ansätze erfordern in der Regel eine direkte Verbindung zwischen einer Identifizierungsvorrichtung und der Datenbank, was Sicherheitsrisiken wie Datenlecks oder unbefugten Zugriff mit sich bringen kann. Darüber hinaus sind viele Ansätze nicht in der Lage, eine Überprüfung in Echtzeit durchzuführen, was zu Verzögerungen und Ineffizienzen führen kann. Ein weiteres Problem besteht darin, dass die Genauigkeit der Identifizierung stark von der Qualität der erfassten Daten und der verwendeten Algorithmen abhängt. Falsch positive oder falsch negative Ergebnisse können zu erheblichen Problemen bei sicherheitskritischen Anwendungen führen.

Zudem können viele Identifizierungsvorrichtungen, die auf einem Identifikationsdokument und biometrischen Merkmalen basieren, auf eine (nahezu) Echtzeitidentifizierung eingeschränkt sein, wodurch entweder Abstriche bei der Qualität der Identifizierung oder ein stark gesteigerter Aufwand verbunden sein können.

Trotz Fortschritten auf dem Gebiet der Identifizierung und Authentifizierung besteht nach wie vor Bedarf an Systemen und Verfahren, die eine höhere Genauigkeit, Sicherheit und Effizienz bieten. Insbesondere gibt es Bedarf an Lösungen, die trotz hoher Sicherheitsstandards besonders einfach skalierbar sind, insbesondere im Hinblick auf verschiedene Einsatzorte.

Es ist daher eine Aufgabe der vorliegenden Erfindung, einen Ansatz zur Identifizierung und Authentifizierung von Personen bereitzustellen, der die Nachteile bekannter Systeme überwindet.

Erfindungsgemäß wird die Aufgabe durch ein Identifizierungsverfahren gelöst, das eine Zentraleinheit und eine (davon) örtlich getrennte (oder beabstandete) Datenerfassungsvorrichtung verwendet, die über einen (vorzugsweise gesicherten) Kommunikationskanal miteinander verbunden sind. Die Datenerfassungsvorrichtung initiiert die Identifizierung einer Person basierend auf einem ihr zugeordneten Identifikationsdokument. Dabei werden Informationen, die auf dem Identifikationsdokument hinterlegt sind, sowie mindestens ein Merkmal der Person erfasst. Zusätzlich wird eine Benutzeroberfläche bereitgestellt, um ein Prüfprotokoll einzugeben. Die erfassten Daten werden über den Kommunikationskanal an die Zentraleinheit übertragen. Die Zentraleinheit führt die Identifizierung der Person durch, indem sie die hinterlegten Informationen, das mindestens eine Merkmal der Person und das Prüfprotokoll prüft, um ein Prüfergebnis mit einem Vertrauenswert zu erhalten. Sollte der Vertrauenswert unterhalb eines vorgegebenen Schwellwerts liegen, wird eine Verifizierung des Prüfergebnisses initiiert.

Die Datenerfassungsvorrichtung initiiert einen Identifizierungsprozess für die Person und kann daher auch als eine Identifizierungsvorrichtung bezeichnet werden. Vorzugsweise dient die Datenerfassungsvorrichtung der Erfassung von Informationen oder Daten. Daher muss die Datenerfassungsvorrichtung nicht sämtliche Schritte des Identifizierungsprozesses ausführen oder kann auch gar keinen Schritt eines Identifizierungsprozesses ausführen, da der Identifizierungsprozess zumindest teilweise an der Zentraleinheit ausgeführt wird und daher innerhalb der Infrastruktur lokalisiert werden kann. Die Datenerfassungsvorrichtung kann aber lokal Aufgaben übernehmen, welche der Identifizierung der Person dienen, bspw. eine initiale Prüfung des zugeordneten Identifikationsdokument, wie es nachstehen im Detail ausgeführt wird. Die Begriffe Datenerfassungsvorrichtung und Identifizierungsvorrichtung können in der vorliegenden Offenbarung gleichermaßen für den lokalen Aufbau des Systems verwendet werden.

Das Prüfergebnis wird vorzugsweise an eine Endvorrichtung kommuniziert. Die Endvorrichtung kann vorzugsweise der zu identifizierenden Person zugeordnet sein. Darüber hinaus kann das Prüfergebnis an eine die Identifizierung nutzende Stelle bzw. eine entsprechende Endvorrichtung übermittelt wird. So kann das Prüfergebnis beispielsweise im Anschluss an die Identifizierung zurück an die Datenerfassungsvorrichtung übermittelt werden, oder eine Zuordnung der in der Zentraleinheit festgestellten Identität zu einer vorliegenden Identität kann innerhalb einer zentralisierten Datenbank erfolgen.

Das Identifizierungsverfahren kann ein computer-implementiertes Verfahren sein. So können die Datenerfassungsvorrichtung und die Zentraleinheit als Rechenvorrichtungen mit einem oder mehreren Prozessoren aufgebaut sein, welche eingerichtet sein können, einen oder mehrere Schritte des computer-implementieren Verfahrens auszuführen.

Die Informationen, die auf dem Identifikationsdokument hinterlegt sind, und das mindestens eine Merkmal der Person können (zusammengenommen) als Identitätsinformationen bezeichnet werden. Die dezentrale Verteilung der einzelnen Komponenten (Datenerfassungsvorrichtung und Zentraleinheit) erhöht die Sicherheit und Genauigkeit der Identifizierung, indem sie eine hybride und mehrstufige Überprüfung und Verifizierung der Identitätsinformationen ermöglicht. Das Verfahren ist insbesondere besonders einfach an verschiedenen Orten anwendbar, indem eine automatische Erfassung der Informationen des Identifikationsdokuments und der Merkmale der Person sowie eine Erfassung des Prüfprotokolls durch die Datenerfassungsvorrichtung vor Ort erfolgen kann, wodurch die Anforderungen auch in einem sicherheitskritischen Umfeld vergleichsweise gering gehalten werden können, auch bspw. im Hinblick auf geschultes Sicherheitspersonal.

Da die Identifizierung zentralisiert erfolgt, können Ressourcen an der Zentraleinheit zusammengezogen werden und müssen nicht an den einzelnen Einsatzorten vorgesehen sein. Technisch gesehen ermöglicht die Trennung der Datenerfassungsvorrichtung von der Zentraleinheit eine flexible und skalierbare Systemarchitektur, die sich leicht an unterschiedliche Einsatzszenarien anpassen lässt. Die Verwendung mindestens eines gesicherten Kommunikationskanals gewährleistet dabei die Vertraulichkeit und Integrität der übertragenen Daten. Insgesamt bietet das erfindungsgemäße Verfahren eine robuste Lösung für eine Identifizierung von Personen, die flexibel, skalierbar und sicher ist.

Die Zentraleinheit ist von der Datenerfassungsvorrichtung örtlich getrennt. Dies bedeutet, dass sich die Datenerfassungsvorrichtung und die Zentraleinheit nicht am selben Ort befinden, sondern räumlich beabstandet sind und über den Kommunikationskanal miteinander kommunizieren. Die Zentraleinheit kann in einem zentralen Rechenzentrum angeordnet sein, welches über mindestens eine Datenleitung, bspw. über ein WAN, MAN oder LAN, mit lokalen Datenerfassungsvorrichtungen kommunizieren kann und so jeweilige Kommunikationskanäle bereitstellt. Aus der Perspektive einer Datenerfassungsvorrichtung kann die Zentraleinheit als eine in einer Cloud vorgesehene Zentraleinheit aufgefasst werden. Aus der Perspektive der Zentraleinheit können die Datenerfassungsvorrichtungen als Vorrichtungen aufgefasst werden, die an Einsatzorten vorgesehen sind, welche vom Standort der Zentraleinheit räumlich getrennt sind.

Die Zentraleinheit und die Datenerfassungsvorrichtung kommunizieren miteinander vorzugsweise über mindestens einen gesicherten Kanal, um eine sichere und zuverlässige Übertragung von Daten zu gewährleisten. Ein sicherer Kommunikationskanal kann beispielsweise eine Transportverschlüsselung bereitstellen. Ferner können die Datenerfassungsvorrichtung und/oder die Zentraleinheit die Kommunikationsdaten verschlüsseln, wodurch ein gesicherter Kommunikationskanal bereitgestellt werden kann. Zudem können sich die Datenerfassungsvorrichtung und/oder die Zentraleinheit gegenseitig elektronisch authentifizieren, um ein ungewolltes Abfließen von Identitätsdaten und/oder Identitätsinformationen zu verhindern.

Die Datenerfassungsvorrichtung kann ferner an die Zentraleinheit über mehrere gesicherten Kanäle (oder Kommunikationskanäle) angebunden sein. So können bspw. das erfasste mindestens eine Merkmal der Person und die erfassten Informationen vom Identifikationsdokument separat über getrennte Kommunikationskanäle an die Zentraleinheit kommuniziert werden, und/oder wenn einzelne Komponenten der Datenerfassungsvorrichtung, wie bspw. die Benutzeroberfläche und möglicherweise weitere Datenerhebungskomponenten miteinander und/oder mit der Zentraleinheit kommunizieren. Hierbei können jeweils separate gesicherte Kanäle vorgesehen sein.

Die Datenerfassungsvorrichtung initiiert einer Identifizierung einer Person auf der Grundlage eines zu erfassenden Identifikationsdokuments, das der Person zugeordnet ist. Dieser Schritt kann eine Aktivierung der Datenerfassungsvorrichtung aufweisen, um das Identifikationsdokument zu erfassen. Hierbei kann die Datenerfassungsvorrichtung die auf dem Dokument hinterlegten Daten auslesen und zwischenspeichern. Die Daten/Informationen können auf unterschiedliche Weise auf dem Dokument hinterlegt sein, bspw. gespeichert in einem Chip oder Magnetstreifen oder optisch als QR oder sonstiger Code oder Muster aufgedruckt, eingraviert, geprägt, geätzt, codiert in einem temperatur- oder druckempfindliches Material vorgesehen und/oder anderweitig aufgebracht sein, in beliebiger Kombination. So können beispielsweise Daten/Informationen auf dem Dokument elektronisch gespeichert und zusätzlich (oder optional) zumindest teilweise aufgedruckt sein. Die vorliegende Offenbarung ist nicht auf eine bestimmte Art des Vorhaltens von Daten/Informationen auf dem Identifikationsdokument beschränkt. Ferner können die erfassten Daten für die weitere Verarbeitung vorbereitet werden. Vorzugsweise kann das Identifikationsdokument ein Personalausweis, ein Reisepass, ein Führerschein, eine Geburtsurkunde, ein Sozialversicherungsausweis, eine Krankenversicherungskarte, eine Arbeitserlaubnis, ein Studentenausweis, ein militärischer Dienstausweis, ein Visum, ein Mitarbeiterausweis, ein Mitgliedsausweis (z.B. Bibliothek, Fitnessstudio), ein Wählerausweis, ein Aufenthaltstitel oder ein Kredit- oder Debitkarte oder eine Kombination der Vorgenannten sein. Weitere staatliche oder private Identifikationsdokumente sind denkbar. Vorzugsweise weist das Identifikationsdokument einen (gesicherten) Speicher zum Speichern der Informationen auf, auf den die Datenerfassungsvorrichtung zugreifen kann, um die Informationen auszulesen.

Optional kann auch eine möglicherweise notwendige Einverständniserklärungen der zu identifizierenden Person zur Weiterverarbeitung der Identitätsdaten und/oder Identitätsinformationen von der Datenerfassungsvorrichtung eingesammelt werden. Dies kann bspw. als Teil eines Prüfprotokolls erfolgen, wie es nachfolgend im Detail ausgeführt wird.

Die Datenerfassungsvorrichtung erfasst mindestens ein Merkmal der Person. Dies kann biometrische Daten, physische Merkmale oder Verhaltensmerkmale aufweisen, wobei die vorliegende Erfindung nicht auf einen bestimmten Merkmalssatz oder -typ beschränkt ist. Merkmale können insbesondere biometrische Merkmale umfassen. Ferner können Merkmale physische Merkmale umfassen, wie bspw. Größe, Gewicht, Haarfarbe, Augenfarbe, Hautfarbe, Tätowierungen, Narben oder Muttermale, um einige Beispiele zu nennen. Alternativ oder zusätzlich können Merkmale Verhaltensmerkmale aufweisen, bspw. eine Unterschrift, ein Tippverhalten (Keyboard Dynamics), einen Geh- oder Bewegungsstil, oder ein Mausbewegungsmuster, um einige beispielhaft zu nennen. Es sollte verständlich sein, dass die vorliegende Erfindung eine beliebige Auswahl aus einem oder mehreren der vorgenannten und weiteren der Person zugeordneten Merkmalen treffen und erfassen kann. Vorzugsweise sind die erfassten Merkmale geeignet, um die Person zu identifizieren. Ferner kann vorzugsweise eine Korrelation zwischen den auf dem Identifikationsdokument hinterlegten Informationen bestehen, sodass ein zumindest teilweiser Abgleich der Informationen mit den erfassten Merkmalen eine Identifizierung der Person ermöglichen kann. Die Datenerfassungsvorrichtung kann die Merkmale der Person erfassen und vorzugsweise zwischenspeichern. Ferner können die erfassten Merkmale für die weitere Verarbeitung vorbereitet werden.

Die Datenerfassungsvorrichtung kann eine Schnittstelle aufweisen, um eine Benutzeroberfläche zur Eingabe eines Prüfprotokolls bereitzustellen. Das Prüfprotokoll kann (se-mi-)automatisch erstellt werden, bspw. indem die Erfassungsprozesse (automatisch) dokumentiert werden und/oder ihre Durchführung (semi-automatisch) bestätigt wird. Ferner kann die Benutzeroberfläche verwendet werden, um zusätzliche Parameter, Informationen oder Kommentare zu definieren, die für die Identifikation relevant sein können. Das Prüfprotokoll kann derart definiert sein, dass zur Eingabe kein Personal mit besonderer Sicherheitsschulung oder einer erkennungsdienstlichen Schulung erforderlich ist. Vielmehr kann das Prüfprotokoll (semi-)automatisch angefertigt werden und die Benutzeroberfläche kann eingerichtet sein, das Personal bei der Vervollständigung des Prüfprotokolls zu führen.

Sämtliche lokal erfasste Daten, insbesondere die erfassten Informationen, das erfasste mindestens eine Merkmal der Person und das eingelesene Prüfprotokoll, können, vorzugsweise in einem Prüfdatensatz zusammengefasst, über den Kommunikationskanal an die Zentraleinheit übertragen werden. Die gesammelten Daten können sicher oder gesichert an die Zentraleinheit gesendet werden, um dort weiterverarbeitet zu werden.

Im Anschluss kann die Datenerfassungsvorrichtung mit der Initiierung einer Identifizierung einer weiteren Person fortfahren oder ein aktuelles Prüfergebnis der Zentraleinheit abwarten.

Die Zentraleinheit kann die Daten empfangen und verarbeiten, um die Identität der Person zu bestätigen. Hierzu können die Daten des Prüfdatensatzes ausgelesen und geprüft werden. Insbesondere kann die Zentraleinheit die erfassten Informationen, das mindestens eine Merkmal der Person und das Prüfprotokoll prüfen. Das Ergebnis der Prüfung ist ein Prüfergebnis mit einem Vertrauenswert. Hierzu kann die Zentraleinheit die Daten aus dem Prüfdatensatz abgleichen und bewerten und aus den (Teil-)Ergebnissen einen Vertrauenswert ermitteln, der die Zuverlässigkeit der Identifizierung angeben kann. Falls der Vertrauenswert unterhalb eines vorgegebenen Schwellwerts liegt, sollte also der Vertrauenswert nicht einem vorgegebenen Sicherheitsniveau entsprechen, so kann durch die Zentraleinheit eine Verifizierung des Prüfergebnisses angestoßen werden, um die Identität der Person zu bestätigen oder das Prüfergebnis zu verwerfen.

Der Vergleich eines Vertrauenswerts mit einem Schwellwert, dem ein Kriterium zugeordnet ist, wird derart verstanden, dass ein Wert oberhalb des Schwellwerts oder gleich dem Schwellwert das zugeordnete Kriterium erfüllt, während ein Wert unterhalb des Schwellwerts das Kriterium nicht erfüllt. Es sollte verständlich sein, dass je nach Schwellwert und zugehörigem Kriterium der Vergleich auch anders ausfallen kann. So kann das dem Schwellwert zugeordnete Kriterium erfüllt sein, (i) wenn der Wert oberhalb des Schwellwerts liegt, oder (ii) wenn der Wert unterhalb des Schwellwerts liegt oder gleich dem Schwellwert ist, oder (iii) wenn der Wert unterhalb des Schwellwerts liegt. Dem Fachmann ist klar, dass ein Vergleich mit einem Schwellwert und zugeordneten Kriterium mathematisch auch negiert werden kann und Ausführungsformen der Offenbarung umfassen insbesondere auch vorgenannte Fälle (i), (ii) und (iii) für einen Vergleich des Vertrauenswerts mit einem Schwellwert.

Somit kann die Zentraleinheit in einem zweistufigen Prozess das Prüfergebnis berechnen, wobei auf der ersten Stufe eine vollautomatische Prüfung erfolgen kann, welche nur im Bedarfsfall (Vertrauenswert unterhalt des Schwellwerts) einer weitergehenden Verifizierung unterzogen wird. Die Verifizierung kann (semi-)automatisch an der Zentraleinheit durchgeführt werden oder an die zugehörige Datenerfassungsvorrichtung weitergeleitet werden. Das finale Prüfergebnis kann an die Endvorrichtung, bspw. eine der Person zugeordnete Endvorrichtung oder eine beliebige andere Endvorrichtung, gesendet werden, um (die Person) über den Ausgang des Identifikationsprozesses zu informieren. Die Endvorrichtung kann ein Smartphone, ein Tablet oder ein Computer sein, auf dem das Ergebnis der Identifizierung eingesehen werden kann. Die Daten betr. das Prüfergebnis können an die Endvorrichtung (der Person oder einer beliebigen anderen Stelle), die Datenerfassungsvorrichtung oder an weitere zuständige Stellen weitergeleitet werden.

Gemäß einer Ausführungsform umfasst das Prüfen durch die Zentraleinheit ein Prüfen der hinterlegten Informationen, des mindestens einen Merkmals der Person und des Prüfprotokolls unter Verwendung von einem oder mehreren Schwellwerten. Diese Schwellwerte dienen als Referenzpunkte oder Grenzwerte, die festlegen, ob die geprüften Informationen und Merkmale als authentisch und vertrauenswürdig eingestuft werden können. Die Verwendung von Schwellwerten ermöglicht eine differenzierte und präzise Bewertung der Identifikationsdaten, indem sie spezifische Kriterien und Toleranzen für die Akzeptanz oder Ablehnung der Daten des Prüfdatensatzes definiert. Dies erhöht die Genauigkeit und Zuverlässigkeit des Identifizierungsverfahrens, da die Zentraleinheit nicht nur eine einfache Übereinstimmung der Daten prüft, sondern auch die Qualität und Konsistenz der Informationen anhand vorgegebener Standards bewerten kann. Die Schwellwerte können dynamisch angepasst werden, um auf unterschiedliche Sicherheitsanforderungen und Risikostufen zu reagieren, was das System flexibel und anpassungsfähig macht. Hierdurch kann das Identifizierungsverfahren robuster gegenüber Manipulationsversuchen und Fehlern gestaltet werden, da es eine mehrstufige Überprüfung der Daten ermöglicht. Dies trägt ferner dazu bei, die Sicherheit und Integrität des Identifizierungsprozesses zu erhöhen. Darüber hinaus ermöglicht die Verwendung von Schwellwerten eine automatisierte Entscheidungsfindung in der Zentraleinheit, indem Kriterien für die Akzeptanz oder Ablehnung der Identifikationsdaten bereitgestellt werden. Dies reduziert die Notwendigkeit manueller Eingriffe und beschleunigt den Identifizierungsprozess, was insbesondere in Szenarien mit hohem Durchsatz von Vorteil sein kann.

Gemäß einer weiteren Ausführungsform umfasst das Identifizierungsverfahren ein Anpassen des einen oder der mehreren Schwellwerte. Hierdurch kann eine zusätzliche Flexibilität und Anpassungsfähigkeit des Verfahren bewirkt werden, indem die Schwellwerte, die zur Bewertung des Vertrauenswerts herangezogen werden, dynamisch verändert werden. Die Schwellwerte können eine zentrale Rolle bei der Bestimmung spielen, ob eine Verifizierung des Prüfergebnisses initiiert werden muss. Durch das Anpassen dieser Schwellwerte kann das System auf unterschiedliche Sicherheitsanforderungen und Umgebungsbedingungen reagieren. Beispielsweise könnte in einer Umgebung mit höherem Sicherheitsbedarf der Schwellwert gesenkt werden, um eine strengere Überprüfung zu gewährleisten. Umgekehrt könnte in einer weniger kritischen Umgebung der Schwellwert erhöht werden, um die Anzahl der erforderlichen Verifizierungen zu reduzieren und somit die Effizienz zu steigern. Darüber hinaus kann die Zentraleinheit die Schwellwerte basierend auf historischen Daten, aktuellen Bedrohungsanalysen oder anderen relevanten Faktoren anpassen. Ferner kann die Datenerfassungsvorrichtung Rückmeldungen oder Statusberichte an die Zentraleinheit senden, um eine Wirksamkeit der aktuellen Schwellwerte zu bewerten. Durch die Möglichkeit, die Schwellwerte anzupassen, wird das Verfahren nicht nur sicherer, sondern auch anpassungsfähiger an sich ändernde Bedingungen und Anforderungen. Dies kann besonders in Szenarien von Vorteil sein, in denen das Risiko von Identitätsbetrug variiert oder in denen unterschiedliche Benutzergruppen mit unterschiedlichen Sicherheitsanforderungen bedient werden müssen.

Gemäß einer weiteren Ausführungsform umfasst das Identifizierungsverfahren ein Erfassen von Leistungsmetriken, was eine zusätzliche Ebene der Genauigkeit und Anpassungsfähigkeit in den Identifizierungsprozess einführt. Die Leistungsmetriken können verschiedene Parameter umfassen, die die Effizienz und Zuverlässigkeit des Verfahrens bewerten. Insbesondere können die erfassten Leistungsmetriken eine False-Positive Rate und eine False-Negative Rate aufweisen, welche kritische Indikatoren für die Genauigkeit des Identifizierungsverfahrens darstellen können. Die False-Positive Rate gibt an, wie oft das System fälschlicherweise eine Identifizierung als korrekt erkennt, während die False-Negative Rate angibt, wie oft das System fälschlicherweise eine korrekte Identifizierung ablehnt. Durch das Erfassen dieser Metriken kann das System kontinuierlich überwacht und bewertet werden, um sicherzustellen, dass es mit der geforderten Präzision arbeitet. Das Anpassen des einen oder der mehreren Schwellwerte auf der Grundlage der erfassten Leistungsmetriken stellt sicher, dass das System dynamisch auf Veränderungen in der Identifizierungsgenauigkeit reagieren kann. Wenn beispielsweise die False-Positive Rate ansteigt, kann der Schwellwert erhöht werden, um die Anforderungen an die Identifizierung zu verschärfen und somit die Genauigkeit zu verbessern. Umgekehrt kann bei einer hohen False-Negative Rate der Schwellwert gesenkt werden, um die Wahrscheinlichkeit zu erhöhen, dass korrekte Identifizierungen akzeptiert werden. Diese Anpassungen basieren auf den kontinuierlich erfassten Leistungsmetriken und ermöglichen es dem System, sich selbst zu kalibrieren und zu optimieren. Die Verifizierung des Prüfergebnisses kann ebenfalls auf den erfassten Leistungsmetriken basieren, um sicherzustellen, dass die Entscheidung auf einer aktuellen Datenbasis getroffen wird. Durch die Integration der Leistungsmetriken und die dynamische Anpassung der Schwellwerte wird das Identifizierungsverfahren nicht nur präziser, sondern auch flexibler und anpassungsfähiger an unterschiedliche Bedingungen und Anforderungen.

Gemäß einer weiteren Ausführungsform umfasst die Datenerfassungsvorrichtung ein Dokumentenprüfgerät zum Einlesen des Identifikationsdokuments. Diese spezifische Ausgestaltung ermöglicht es, die auf dem Identifikationsdokument hinterlegten Informationen zu erfassen. Das Dokumentenprüfgerät kann verschiedene Technologien nutzen, wie etwa optische Scanner, RFID-Lesegeräte oder Magnetstreifenleser, um auf die auf dem Identifikationsdokument (in einem elektronischen Speicher) hinterlegten Informationen zuzugreifen. Durch die Integration des Dokumentenprüfgeräts wird die Genauigkeit und Zuverlässigkeit der erfassten Informationen gesteigert, da manuelle Eingabefehler minimiert werden. Durch die Vermeidung manueller Eingriffe und Automatisierung des Datenerfassungsprozesses wird die Geschwindigkeit des Verfahrens optimiert. Diese Verbesserungen können insbesondere in sicherheitskritischen Anwendungen von großer Bedeutung sein, um Identifizierungen mit hoher Präzision mit hoher Frequenz durchführen zu können.

Gemäß einer weiteren Ausführungsform umfasst die Datenerfassungsvorrichtung mindestens eine Kamera zum Erfassen des mindestens einen Merkmals der Person. Hierdurch können visuelle Merkmale der Person, wie beispielsweise Gesichtszüge, erfasst werden. Die Integration einer Kamera ermöglicht eine präzise und zuverlässige Erfassung biometrischer Daten, die für die Identifizierung der Person von Bedeutung sein können. Die Kamera kann hochauflösende Bilder aufnehmen, die dann durch entsprechende Bildverarbeitungsalgorithmen analysiert werden können, um Merkmale der Person zu extrahieren. Diese Merkmale können Gesichtserkennungspunkte, Iris-Scans oder andere visuelle Identifikatoren umfassen, die in Kombination mit den auf dem Identifikationsdokument hinterlegten Informationen verwendet werden können, um die Person zu identifizieren. Die Verwendung einer Kamera zur Erfassung (biometrischer) Daten bietet mehrere Vorteile. Erstens erhöht sie die Genauigkeit der Identifizierung, da visuelle Merkmale schwerer zu fälschen sind als andere Formen der Identifikation. Ferner ist in der Regel bei Vor-Ort-Verfahren ohne Aufzeichnung biometrischer Merkmale keine Nachvollziehbarkeit und keine zeitlich-räumliche Entkopplung möglich. Im Gegensatz zu den gemäß bevorzugten Ausführungsformen vorgesehenen Verfahren mit vor Ort per Kamera aufgezeichneten Merkmalen sind für Remote-Verfahren mit per Kamera aufgezeichneten Merkmalen (bspw. "Video-Ident") zahlreiche Fälschungsansätze bekannt, um die erhobenen Merkmale zu manipulieren. Ferner verbessert die Verwendung der Kamera zur Erfassung (biometrischer) Daten die Benutzerfreundlichkeit, da die Erfassung von visuellen Merkmalen in der Regel weniger invasiv ist und schneller durchgeführt werden kann. Durch die Integration einer Kamera wird das Identifizierungsverfahren somit robuster und sicherer, was insbesondere in sicherheitskritischen Anwendungen von Bedeutung sein kann. Insgesamt führt die Einbindung einer Kamera zu einer Verbesserung der Identifizierungsgenauigkeit und -sicherheit, was das Verfahren für eine Vielzahl von Anwendungen, einschließlich Zugangskontrollen, Finanztransaktionen und behördlichen Identifikationsprozessen, besonders geeignet macht. Vorzugsweise können neben einer Kamera weitere Erfassungsgeräte vorgesehen sein, um Merkmale zu erfassen, bspw. ein Fingerabdruck- oder Handvenen-Scanner und dergleichen. Vorzugsweise weist das mindestens eine Merkmal der Person mindestens ein Bild oder eine Videoaufnahme der Person.

Gemäß einer weiteren Ausführungsform umfasst das mindestens eine Merkmal der Person mindestens ein biometrisches Merkmal. Biometrische Merkmale können vorzugsweise ein biometrisches Bild, ein Fingerabdruck oder ein Retina-Scan sein. Alternativ oder zusätzlich können weitere biometrische Merkmale erfasst werden, bspw. Iris-Scan, Gesichtsmerkmale, Handgeometrie, Stimmprofil, oder ein DNA-Profil der Person, um einige Beispiele zu nennen. Durch physiologische Merkmale kann das Sicherheitsniveau und die Genauigkeit weiter gesteigert werden, da die Identifizierung auf einzigartige physiologische Eigenschaften der Person gestützt wird, die schwerer zu fälschen oder zu replizieren sind. Dies reduziert ferner die Wahrscheinlichkeit von Fehlidentifizierungen und erhöht die Zuverlässigkeit des gesamten Identifizierungsverfahrens.

Gemäß einer weiteren Ausführungsform umfasst die Datenerfassungsvorrichtung mindestens eine Eingabe/Ausgabe-Schnittstelle zum Bereitstellen der Benutzeroberfläche, wobei die Benutzeroberfläche interaktive Elemente zur Eingabe des Prüfprotokolls aufweist. Die Eingabe/Ausgabe-Schnittstelle ermöglicht eine vorzugsweise geführte Interaktion zwischen Benutzer und Datenerfassungsvorrichtung. Vorzugsweise wird eine Plattform bereitstellt, über die die Parameter und Informationen des Prüfprotokolls bestätigt oder eingegeben werden können. Dies reduziert die Notwendigkeit für zusätzliche Hardware oder externe Geräte, da die erforderlichen Daten direkt über die Datenerfassungsvorrichtung erfasst und verarbeitet werden können. Die interaktiven Elemente der Benutzeroberfläche, die zur Eingabe des Prüfprotokolls dienen, bieten eine benutzerfreundliche und intuitive Möglichkeit, die notwendigen Informationen einzugeben. Dies kann beispielsweise durch Textfelder, Dropdown-Menüs oder andere interaktive Komponenten erfolgen, die es dem Benutzer ermöglichen, die erforderlichen Informationen und Parameter gemäß dem Prüfprotokoll einzugeben. Diese interaktiven Elemente tragen dazu bei, Fehler bei der Dateneingabe zu minimieren und die Effizienz des Identifizierungsprozesses zu erhöhen. Darüber hinaus ermöglicht die Integration der interaktiven Elemente eine dynamische Anpassung der Benutzeroberfläche an spezifische Anforderungen des Identifizierungsprozesses, was die Flexibilität und Anpassungsfähigkeit des Systems erhöht. Zudem wird die Sicherheit des Identifizierungsverfahrens erhöht, da die direkte Eingabe und Verarbeitung der Daten innerhalb der Datenerfassungsvorrichtung das Risiko von Datenverlust oder -manipulation verringert.

Gemäß einer weiteren Ausführungsform umfasst die Zentraleinheit mindestens eine weitere Eingabe/Ausgabe-Schnittstelle zum Bereitstellen einer weiteren Benutzeroberfläche für das Verifizieren des Prüfergebnisses, wobei die weitere Benutzerschnittstelle interaktive Elemente zum Bereitstellen des Prüfergebnisses, der übertragenen Informationen, des mindestens einen Merkmals der Person und des Prüfprotokolls, oder zur Eingabe von Verifizierungsparametern aufweist. Die Benutzeroberfläche kann auf einem responsiven Design basieren, das sich an verschiedene Geräte und Bildschirmgrößen der Zentraleinheit und weiteren angeschlossenen Geräten anpassen kann, aufweisend Tablets und Smartphones. Es sollte verständlich sein, dass eine Benutzerschnittstelle der Datenerfassungsvorrichtung ähnliche oder identische Kriterien der Benutzerfreundlichkeit erfüllen kann, wie sie hier in Bezug auf die Benutzeroberfläche der Zentraleinheit im Detail beschrieben sind. Entsprechend kann die Benutzerschnittstelle der Datenerfassungsvorrichtung analog zur Benutzerschnittstelle der Zentraleinheit aufgebaut sein. Die Hauptansicht der Schnittstelle kann das Prüfergebnis mit ermittelten Vertrauenswerten anzeigen, ergänzt durch übertragene Informationen und Merkmale der zu verifizierenden Person. Diese Informationen können in strukturierten Abschnitten oder Tabs organisiert sein, sodass der Benutzer schnell zwischen verschiedenen Datensätzen wechseln kann. Jedes Merkmal der Person, wie biometrische Daten oder physische Merkmale, kann durch visuelle Darstellungen wie Fotos, Grafiken oder Diagramme ergänzt werden, um die Verifizierung zu erleichtern. Interaktive Elemente wie Dropdown-Menüs, Kontrollkästchen und Schieberegler könnten verwendet werden, um die Eingabe und Anpassung von Verifizierungsparametern zu ermöglichen. Beispielsweise könnte ein Benutzer über ein Dropdown-Menü den gewünschten Verifizierungsparameter auswählen und dann mit einem Schieberegler einen entsprechenden Schwellwert oder einen Parameter anpassen. Diese interaktiven Werkzeuge würden es dem Benutzer ermöglichen, die Verifizierungskriterien schnell und präzise anzupassen, basierend auf den spezifischen Anforderungen des jeweiligen Identifikationsvorgangs. Zusätzlich kann die Schnittstelle eine Echtzeit-Feedback-Funktion aufweisen, die dem Benutzer der Zentraleinheit eine Rückmeldung zu vorgenommenen Änderungen geben kann. Dies kann durch visuelle Hinweise wie Farbcodes oder durch Pop-up-Benachrichtigungen erfolgen, die den Benutzer über den Status der Verifizierung informieren. Weitere Komponenten der Schnittstelle können ein Protokollierungs- und Berichtssystem sein, das durchgeführten Aktionen und Änderungen dokumentiert. Dies trägt nicht nur zur Nachvollziehbarkeit und Transparenz bei, sondern bildet auch eine Grundlage für weitere Analysen des Identifikationsprozesses zwecks Optimierung (bspw. durch Anpassung der Schwellwerte). Die Benutzeroberfläche kann mehrere Rollen der Benutzer unterscheiden, bspw. Identitätsprüfende, Administratoren und weitere, in beliebiger Kombination, und daraus Berechtigungen und weitere Kontrollen ableiten und umsetzen. So können bspw. beabsichtigte oder unbeabsichtigte Ergebnismanipulationen durch Identitätsprüfende erschwert werden.

In einer weiteren bevorzugten Ausführungsform weist das Prüfprotokoll eine oder mehrere Angaben auf, wobei die eine oder mehreren Angaben eines oder mehrere aus Zulässigkeit des Identifikationsdokuments, zeitliche Gültigkeit des Identifikationsdokuments, Eignung des Identifikationsdokuments oder Oberflächenzustand des Identifikationsdokuments aufweisen. Die Angaben können von der Datenerfassungsvorrichtung zumindest teilweise automatisch erfasst und im Prüfprotokoll berücksichtigt werden. Die Angaben ermöglichen eine umfassendere Bewertung und Verifizierung des Dokuments. Beispielsweise könnte die Zulässigkeit überprüft werden, um festzustellen, ob das Dokument in dem betreffenden Kontext akzeptiert wird. Die zeitliche Gültigkeit stellt sicher, dass das Dokument nicht abgelaufen ist. Dies kann beispielsweise anhand eines Ablaufdatums des Identifikationsdokuments überprüft werden. Die Eignung des Dokuments könnte angeben, ob das Dokument den erforderlichen Standards entspricht, und der Oberflächenzustand könnte auf Schäden oder Manipulationen des Identifikationsdokuments hinweisen. Beispielsweise kann eine spezifische Prüfsoftware automatisch das Ablaufdatum des Identifikationsdokuments überprüfen. Alternativ oder zusätzlich kann ein System mithilfe von Bildverarbeitungsalgorithmen Beschädigungen auf dem Identifikationsdokument erkennen und bewerten. Diese zusätzlichen Maßnahmen tragen zur Genauigkeit und Zuverlässigkeit des Identifikationsprozesses bei, indem sie sicherstellen, dass nur gültige und geeignete Dokumente bei der weiteren Identifizierung der Person verwendet werden.

Gemäß einer weiteren Ausführungsform weist das Prüfprotokoll eine oder mehrere Angaben zur Person auf, wobei die eine oder mehreren Angaben zur Person eines oder mehrere aus Erfassungsgüte des mindestens einen biometrischen Merkmals, zusätzliche Identifikationsmerkmale der Person oder Bewertungsparameter aufweisen. Die Angaben können von der Datenerfassungsvorrichtung zumindest teilweise automatisch erfasst und im Prüfprotokoll berücksichtigt werden. So kann neben den grundlegenden Identifikationsinformationen auch die Qualität und Genauigkeit der erfassten biometrischen Daten berücksichtigt werden. Zum Beispiel könnte die Erfassungsgüte durch die Schärfe und Klarheit eines Fingerabdrucks oder eines Gesichtsscans bewertet werden. Zusätzliche Identifikationsmerkmale könnten Informationen wie besondere physische Merkmale oder Verhaltensmuster aufweisen. Bewertungsparameter könnten die Übereinstimmungsrate der biometrischen Daten mit bestehenden Datenbanken umfassen. Implementiert werden könnte dies durch ein System, das die Qualität eines biometrischen Merkmals, bspw. eines Fingerabdruckscans analysiert und eine Rückmeldung gibt, ob der Scan ausreichend klar für eine verlässliche Identifizierung ist. Ein weiteres Beispiel könnte ein Algorithmus zur Gesichtserkennung sein, der eine Übereinstimmung zwischen einem aufgenommenen Bild und gespeicherten Daten bewerten und eine Genauigkeitsrate liefern kann. Die weiteren Angaben zur Person verbessern die Genauigkeit und Zuverlässigkeit des Identifikationsprozesses.

In einer weiteren Ausführungsform umfasst das Verfahren ferner ein Authentifizieren eines Benutzers der Zentraleinheit. Diese Maßnahme erhöht die Sicherheit der Verarbeitung, indem sichergestellt wird, dass nur autorisierte Personen Zugriff auf die Zentraleinheit und sensible Daten haben. Durch die Authentifizierung wird das Risiko unbefugter Zugriffe minimiert und die Integrität sowie die Vertrauenswürdigkeit des Identifikationsverfahrens gestärkt. Bevor der Benutzer auf die Zentraleinheit zugreifen und den Identifikationsprozess steuern kann, muss seine Identität überprüft werden. Dies kann durch verschiedene Methoden der Authentifizierung geschehen, wie zum Beispiel die Eingabe eines Benutzernamens und Passworts, die Nutzung einer Zwei-Faktor-Authentifizierung (2FA), bei der ein zusätzlicher Code über ein Mobilgerät (oder ein weiteres Endgerät) gesendet wird, oder durch biometrische Verfahren wie Fingerabdruck- oder Gesichtserkennung. Beispielsweise könnte ein Systemadministrator, bevor er mit einer Identifizierungssoftware interagieren kann, seinen Fingerabdruck scannen und einen einmaligen Code eingeben, der an sein Mobiltelefon gesendet wird. Eine andere Implementierung könnte den Einsatz von Smartcards umfassen, bei denen der Benutzer die Karte in ein Lesegerät einführt und zusätzlich eine PIN eingibt, um Zugang zur Zentraleinheit zu erhalten. Diese Maßnahmen stellen sicher, dass nur autorisierte Personen Zugriff auf sensible Daten und Funktionen des Identifikationssystems haben, wodurch die Sicherheit und Integrität des Verfahrens erhöht wird. Vorzugsweise kann das Verfahren auch ein Authentifizieren eines Benutzers der Datenerfassungsvorrichtung vorsehen. Die Authentifizierung kann analog zur Authentifizierung an der Zentraleinheit erfolgen. Diese Maßnahme können die Sicherheit der Verarbeitung erhöhen, indem sichergestellt wird, dass nur autorisierte Personen Identitätsdaten erfassen und verarbeiten dürfen.

Erfindungsgemäß sind ferner ein oder mehrere Datenträger vorgesehen, die Befehle speichern, die, wenn sie von mindestens einer Rechenvorrichtung ausgeführt werden, die mindestens eine Rechenvorrichtung einrichten, das Verfahren nach einer oder mehreren Ausführungsformen auszuführen. Vorzugsweise kann mindestens eine Rechenvorrichtung mindestens eine Datenerfassungsvorrichtung sein und eine weitere Rechenvorrichtung kann eine Zentraleinheit darstellen, welche miteinander zusammenarbeiten. Insbesondere kann die mindestens eine Rechenvorrichtung eingerichtet sein, ein Identifizierungsverfahren auszuführen, umfassend Bereitstellen einer Zentraleinheit und einer örtlich getrennten Datenerfassungsvorrichtung, wobei die Datenerfassungsvorrichtung an die Zentraleinheit über einen vorzugsweise gesicherten Kommunikationskanal angebunden ist, Initiieren einer Identifizierung einer Person durch die Datenerfassungsvorrichtung basierend auf einem Identifikationsdokument, das der Person zugeordnet ist, umfassend Erfassen von auf dem Identifikationsdokument hinterlegten Informationen durch die Datenerfassungsvorrichtung, Erfassen mindestens eines Merkmals der Person durch die Datenerfassungsvorrichtung und Bereitstellen einer Benutzeroberfläche zur Eingabe eines Prüfprotokolls, Übertragen der hinterlegten Informationen, des mindestens einen Merkmals der Person und des Prüfprotokolls über den Kommunikationskanal an die Zentraleinheit, Durchführen der Identifizierung der Person durch die Zentraleinheit, umfassend Prüfen der hinterlegten Informationen, des mindestens einen Merkmals der Person und des Prüfprotokolls, um ein Prüfergebnis mit einem Vertrauenswert zu erhalten und falls der Vertrauenswert unterhalb eines vorgegebenen Schwellwerts liegt, Initiieren einer Verifizierung des Prüfergebnisses, und Kommunizieren des Prüfergebnisses an eine Endvorrichtung.

Erfindungsgemäß ist ferner eine Vorrichtung vorgesehen, die zum Ausführen des Verfahrens nach einer der Ausführungsformen eingerichtet ist. Die Vorrichtung kann einen Speicher und einen oder mehrere Prozessoren aufweisen. Der Speicher kann Befehle speichern, die, wenn sie von dem einen oder den mehreren Prozessoren ausgeführt werden, die Vorrichtung einrichten, das Verfahren auszuführen.

Erfindungsgemäß ist ferner ein System zum Durchführen einer verteilten Identifizierung definiert, das eine Zentraleinheit, eine Vielzahl von Datenerfassungsvorrichtungen, welche von der Zentraleinheit örtlich getrennt sind und jeweils an die Zentraleinheit über einen vorzugsweise gesicherten Kommunikationskanal angebunden sind und mindestens eine Endvorrichtung umfasst. Eine Datenerfassungsvorrichtung aus der Vielzahl von Datenerfassungsvorrichtungen ist zum Initiieren einer Identifizierung der Person basierend auf einem Identifikationsdokument eingerichtet, das der Person zugeordnet ist, umfassend Erfassen von auf dem Identifikationsdokument hinterlegten Informationen durch die Datenerfassungsvorrichtung, Erfassen mindestens eines Merkmals der Person durch die Datenerfassungsvorrichtung und Bereitstellen einer Benutzeroberfläche zur Eingabe eines Prüfprotokolls. Die Datenerfassungsvorrichtung ist ferner zum Übertragen der hinterlegten Informationen, des mindestens einen Merkmals der Person und des Prüfprotokolls über den Kommunikationskanal an die Zentraleinheit eingerichtet. Die Zentraleinheit ist zum Durchführen der Identifizierung der Person eingerichtet, umfassend Prüfen der hinterlegten Informationen, des mindestens einen Merkmals der Person und des Prüfprotokolls, um ein Prüfergebnis mit einem Vertrauenswert zu erhalten und falls der Vertrauenswert unterhalb eines vorgegebenen Schwellwerts liegt, Initiieren einer Verifizierung des Prüfergebnisses. Die Zentraleinheit ist ferner zum Kommunizieren des Prüfergebnisses an die mindestens eine Endvorrichtung eingerichtet.

In einer bevorzugten Ausführungsform werden die hinterlegten Informationen, das mindestens eine Merkmal der Person und das Prüfprotokolls unter Verwendung von einem oder mehreren Schwellwerten geprüft.

Gemäß einer weiteren Ausführungsform ist die Zentraleinheit zum Anpassen des einen oder der mehreren Schwellwerte eingerichtet.

In einer weiteren Ausführungsform ist die Zentraleinheit zum Erfassen von Leistungsmetriken eingerichtet, wobei das Anpassen des einen oder der mehreren Schwellwerte ein Anpassen des einen oder der mehreren Schwellwerte auf der Grundlage der erfassten Leistungsmetriken, insbesondere einer False-Positive Rate und einer False-Negative Rate, aufweist.

Gemäß einer noch weiteren Ausführungsform umfasst die Datenerfassungsvorrichtung ein Dokumentenprüfgerät zum Einlesen des Identifikationsdokuments.

In einer Ausführungsform umfasst die Datenerfassungsvorrichtung mindestens eine Kamera zum Erfassen des mindestens einen Merkmals der Person.

Gemäß einer weiteren Ausführungsform weist das mindestens eine Merkmal der Person mindestens ein Bild oder eine Videoaufnahme der Person auf.

In einer weiteren Ausführungsform weist das mindestens eine Merkmal der Personen mindestens ein biometrisches Merkmal der Personen auf, vorzugsweise ein biometrisches Bild, einen Fingerabdruck, oder einen Retina-Scan.

In einer weiteren bevorzugten Ausführungsform umfasst die Datenerfassungsvorrichtung mindestens eine Eingabe/Ausgabe-Schnittstelle zum Bereitstellen der Benutzeroberfläche, wobei die Benutzeroberfläche interaktive Elemente zur Eingabe des Prüfprotokolls aufweist.

Gemäß einer weiteren Ausführungsform umfasst die Zentraleinheit mindestens eine weitere Eingabe/Ausgabe-Schnittstelle zum Bereitstellen einer weiteren Benutzeroberfläche für das Verifizieren des Prüfergebnisses, wobei die weitere Benutzerschnittstelle interaktive Elemente zum Bereitstellen des Prüfergebnisses, der übertragenen Informationen, des mindestens einen Merkmals der Person und des Prüfprotokolls, oder zur Eingabe von Verifizierungsparametern aufweist.

In einer weiteren Ausführungsform weist das Prüfprotokoll eine oder mehrere Angaben auf, wobei die eine oder mehreren Angaben eines oder mehrere aus Zulässigkeit des Identifikationsdokuments, zeitliche Gültigkeit des Identifikationsdokuments, Eignung des Identifikationsdokuments oder Oberflächenzustand des Identifikationsdokuments aufweisen.

Gemäß einer weiteren Ausführungsform weist das Prüfprotokoll ferner eine oder mehrere Angaben zur Person auf, wobei die eine oder mehreren Angaben zur Person eines oder mehrere aus Erfassungsgüte des mindestens einen biometrischen Merkmals, zusätzliche Identifikationsmerkmale der Peron oder Bewertungsparameter aufweisen.

Gemäß einer weiteren Ausführungsform ist die Zentraleinheit zum Authentifizieren eines Benutzers der Zentraleinheit eingerichtet, um die Verifizierung zu initiieren.

Es sollte verständlich sein, dass das Identifizierungsverfahren gemäß weiteren Ausführungsformen der vorliegenden Erfindung funktionale Merkmale aufweisen kann, welche strukturellen Merkmalen des erfindungsgemäßen Systems oder der Vorrichtung gemäß Ausführungsformen der vorliegenden Erfindung entsprechen können. Ferner sollte verständlich sein, dass in weiteren Ausführungsformen funktionale Merkmale von Verfahren gemäß Ausführungsformen der vorliegenden Erfindung als strukturelle Merkmale des erfindungsgemäßen Systems oder der Vorrichtung, bspw. als Hardwaremodule oder als Softwaremodule oder als Hardwaremodule, welche mit spezialisierter Software konfiguriert sein können, vorgesehen sein können.

Weitere Vorteile des erfindungsgemäßen Identifizierungsverfahrens, der Vorrichtung und des Systems ergeben sich aus der folgenden Beschreibung, in der die Erfindung anhand von Ausführungsbeispielen unter Bezugnahme auf die beigefügten Zeichnungen näher erläutert wird. Darin zeigen:
- Figur 1: ein schematisches Blockdiagramm eines Systems zur verteilten Identifizierung, das eine Zentraleinheit, eine Datenerfassungsvorrichtung, eine Endvorrichtung und eine zu identifizierende Person darstellt, gemäß einer Ausführungsform,
- Figur 2: ein schematisches Blockdiagramm eines Systems gemäß einer Ausführungsform, das eine Zentraleinheit und eine Vielzahl von Datenerfassungsvorrichtungen aufweist, und
- Figur 3: ein Flussdiagramm eines Identifizierungsverfahrens nach einer Ausführungsform.

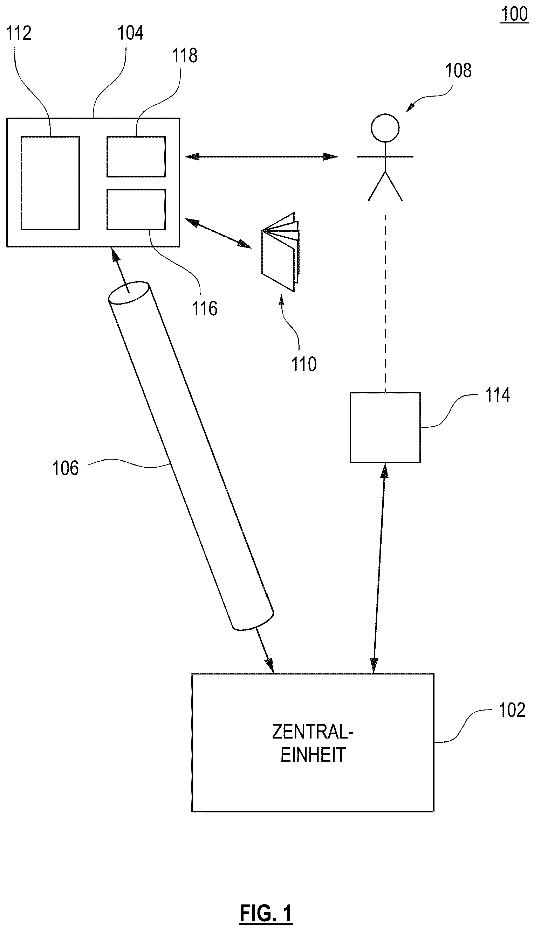

Figur 1 zeigt ein schematisches Diagramm eines Systems 100 zur Durchführung eines Identifizierungsverfahrens. Das System umfasst eine Zentraleinheit 102, die für die Verarbeitung und Verifizierung von Identifikationsdaten verantwortlich sein kann. Die Zentraleinheit 102 kann mit einer Datenerfassungsvorrichtung 104 interagieren, vorzugsweise ist die Zentraleinheit 102 mit der Datenerfassungsvorrichtung 104 über einen Kommunikationskanal 106 verbunden. Der Kommunikationskanal 106 ist vorzugsweise gesichert, um die Integrität und Vertraulichkeit der übertragenen Daten zu gewährleisten.

Die Datenerfassungsvorrichtungen 104 kann zum Initiieren einer Identifizierung einer Person 108 basierend auf einem Identifikationsdokument 110 eingerichtet sein, das der Person 108 zugeordnet ist. Hierzu können auf dem Identifikationsdokument 110 hinterlegte Informationen und ferner mindestens ein Merkmal der Person 108 durch die Datenerfassungsvorrichtung 104 erfasst werden. Ferner kann ein Prüfprotokoll erstellt werden.

Die Datenerfassungsvorrichtung 104 kann hierzu eine oder mehrere Komponenten aufweisen. Dies kann eine Eingabe/Ausgabe-Schnittstelle mit einer Benutzeroberfläche 112, ein Dokumentenprüfgerät 116 und/oder eine Kamera 118 umfassen. Das Dokumentenprüfgerät 116 kann verwendet werden, um das Identifikationsdokument 110, das der zu identifizierenden Person 108 zugeordnet ist, zu erfassen. Die Kamera 111 kann mindestens ein Merkmal der Person 108 erfassen, beispielsweise mittels eines Bildes oder einer Videoaufnahme. Die Benutzeroberfläche 112 kann die Eingabe eines Prüfprotokolls ermöglichen, das zusätzliche Informationen zur Verifizierung der Identität der Person 108 bereitstellen kann.

Die erfassten Informationen, bspw. die Daten des Identifikationsdokuments 110, das mindestens eine (biometrische) Merkmal der Person 108 und/oder das Prüfprotokoll, in beliebiger Kombination, können über den Kommunikationskanal 106 an die Zentraleinheit 102 übertragen werden. Die Zentraleinheit 102 führt eine Prüfung der empfangenen Daten durch, um ein Prüfergebnis mit einem Vertrauenswert zu erhalten. Falls der Vertrauenswert unterhalb eines vorgegebenen Schwellwerts liegt, wird eine Verifizierung des Prüfergebnisses initiiert.

Das System 100 umfasst ferner eine Endvorrichtung 114. Die Endvorrichtung 114 kann der Person 108 zugeordnet sein. Die Endvorrichtung 114 empfängt das Prüfergebnis von der Zentraleinheit 102 und kann einem Nutzer, bspw. der Person 108 oder einem anderen beliebigen Nutzer oder einer autorisierten Stelle, entsprechende Rückmeldungen geben. Die Kommunikation zwischen der Datenerfassungsvorrichtung 104 und der Endvorrichtung 114 erfolgt über einen weiteren Kommunikationskanal, der von dem Kommunikationskanal 106 getrennt sein kann.

Die Datenerfassungsvorrichtung 104 kann zusätzlich eingerichtet sein, Leistungsmetriken zu erfassen und die Schwellwerte für die Prüfung der Identifikationsdaten anzupassen. Dies kann insbesondere eine Anpassung der Schwellwerte basierend auf der False-Positive-Rate und der False-Negative-Rate umfassen, um die Genauigkeit und Zuverlässigkeit des Identifizierungsverfahrens zu verbessern.

Die Zentraleinheit 102 kann ferner eine weitere Eingabe/Ausgabe-Schnittstelle umfassen, die eine zusätzliche Benutzeroberfläche zur Verifizierung des Prüfergebnisses bereitstellt. Diese Benutzeroberfläche kann interaktive Elemente enthalten, die es einem Benutzer ermöglichen, das Prüfergebnis, die übertragenen Informationen, die biometrischen Merkmale der Person 108 und das Prüfprotokoll einzusehen und Verifizierungsparameter einzugeben.

Die Zentraleinheit 102 und die Datenerfassungsvorrichtung 104 können räumlich voneinander getrennt sein. Dies bedeutet, dass sich die Zentraleinheit 102 und die Datenerfassungsvorrichtung 104 an unterschiedlichen Standorten befinden können. Keine räumliche Trennung liegt vor, wenn Komponenten in einer einzelnen Vorrichtung integriert sind, bspw. in einem Gehäuse. Die räumliche Trennung ermöglicht es, dass die Zentraleinheit 102 mit erforderlichen Ressourcen ausgestattet sein kann, die für die Verarbeitung und Verifizierung von Identifikationsdaten notwendig sind, wie leistungsfähige Server und spezialisierte Software. Gleichzeitig kann die Datenerfassungsvorrichtung 104 vor Ort eingesetzt und auch von Personal betrieben werden, das eine niedrigere Sicherheitsfreigabe haben kann, da die Vorgänge an der Datenerfassungsvorrichtung 104 auf eine Datenerfassung ausgerichtet sein können, während eine Überprüfung der sicherheitskritischen Informationen an der Zentraleinheit 102 erfolgt. Somit können Datenerfassungsvorrichtungen einfach an verschiedenen Einsatzorten in Betrieb genommen werden.

Ein praktisches Beispiel für eine räumliche Trennung könnte ein größeres Unternehmen sein, welches bspw. eine Zutrittskontrolle anhand von Identifikationsdokumenten mit hohem Sicherheitsniveau sicherstellen möchte. Die Zentraleinheit 102 könnte hierbei in einer Sicherheitsabteilung des Hauptsitzes untergebracht sein, während die Datenerfassungsvorrichtung 104 an verschiedenen Filialen oder Außenstellen angeordnet sein kann, um eine Identifizierung von Personen im Rahmen der Zutrittskontrolle durchzuführen. In diesen Filialen oder Außenstellen könnten auch Mitarbeiter die Datenerfassungsvorrichtung 104 bedienen, welche keine Schulung bei der Handhabung und Prüfung von Identitätsdokumenten haben. Dies reduziert die Notwendigkeit, hochqualifiziertes Personal an jedem Standort vorzusehen, und zentralisiert komplexere Verifizierungsprozesse in der Zentraleinheit 102, an der spezialisierte Fachkräfte verfügbar sein können. Ein weiteres Beispiel umfasst eine Behörde, bei der die Zentraleinheit in einem zentralen Rechenzentrum eingerichtet sein kann, während in regionalen Büros die Datenerfassungsvorrichtungen von administrativem Personal genutzt werden kann, um eine Identifikation von Bürgern durchzuführen. Es sollte verständlich sein, dass die vorliegende Erfindung nicht auf diese Beispiele beschränkt ist.

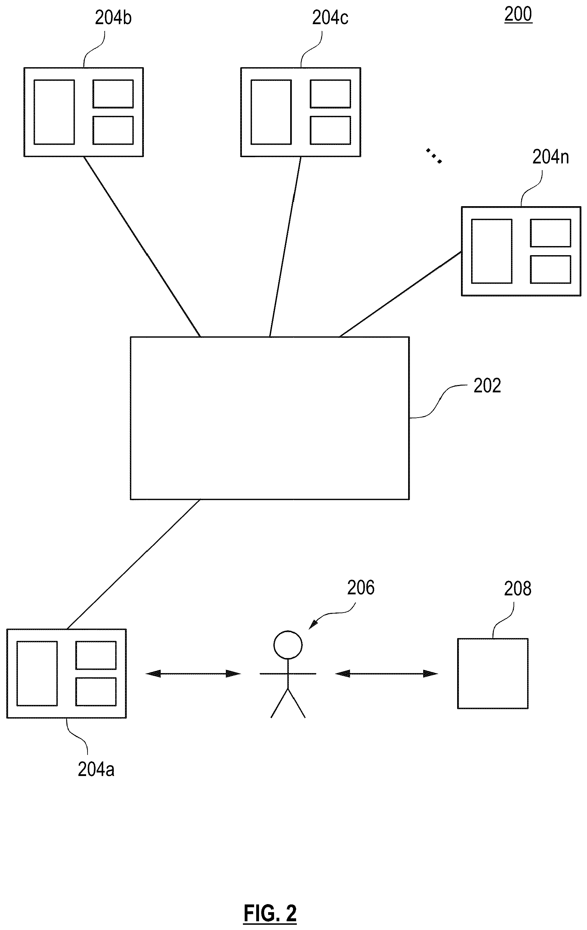

Figur 2 zeigt eine schematische Darstellung eines Systems 200 zur Durchführung einer verteilten Identifizierung. Das System 200 umfasst eine Zentraleinheit 202, eine Vielzahl von Datenerfassungsvorrichtungen 204a, 204b, 204c, ... 204n, welche von der Zentraleinheit 202 örtlich getrennt sind und jeweils über einen vorzugsweise gesicherten Kommunikationskanal an die Zentraleinheit 202 angebunden sind. Jede aus der Vielzahl von Datenerfassungsvorrichtungen 204a, 204b, 204c, ... 204n kann eingerichtet sein, eine Identifikation von Personen anzustoßen. Entsprechend kann das System 200 Ähnlichkeit mit dem in Figur 1 dargestellten System 100 aufweisen. So kann die Zentraleinheit 202 aus System 200 der Zentraleinheit 102 au System 100 entsprechen. Ferner kann die Datenerfassungsvorrichtung 104 aus System 100 einer (oder mehreren) der Datenerfassungsvorrichtungen 204a, 204b, 204c, ... 204n aus System 200 entsprechen.

Wie in Figur 2 dargestellt, kann Datenerfassungsvorrichtung 204a eine Identifizierung der Person 206 anstoßen. Die Person 206 (oder ein anderer Nutzer) kann mit einer Endvorrichtung 208 interagieren. Endvorrichtungen können eine Vielzahl von Geräten umfassen, die zur Anzeige und Interaktion mit den Prüfergebnissen des Identifikationsverfahrens verwendet werden können. Beispiele hierfür sind Smartphones und Tablets, die Benachrichtigungen und detaillierte Informationen über das Prüfergebnis empfangen und anzeigen können. Desktop-Computer oder Laptops, die drahtlos oder drahtgebunden mit der Zentraleinheit verbunden sein können, können ebenfalls eine Plattform zur Anzeige der Ergebnisse bieten. Smartwatches können ferner kurze Benachrichtigungen und Statusupdates direkt am Handgelenk des Benutzers übermitteln.

Selbstbedienungsterminals oder Kioske, die in öffentlichen Bereichen oder innerhalb von Unternehmen aufgestellt sind, können ebenfalls als Endvorrichtungen eingerichtet sein, indem sie den Benutzern Zugriff auf ihre Identifikationsdaten und Prüfergebnisse erlauben. An Sicherheitsstationen können Monitore oder spezielle Kontrollgeräte zur Anzeige und Verifizierung von Identifikationsdaten vorgesehen sein. Gesteuerte Zugangskontrollsysteme, die mit physischen Zugangskontrollen wie Schranken, Türen oder Drehkreuzen verbunden sein können, können ebenfalls als Endvorrichtungen ausgestaltet sein oder zumindest mit Endvorrichtungen kommunizieren. So kann die Datenerfassungsvorrichtung oder das Zugangskontrollsystem bei einer erfolgreichen Identifizierung und bei Vorliegen entsprechender Zutrittsrechte einen Zugang gewähren.

Die Datenerfassungsvorrichtungen 204a, 204b, 204c, ... 204n können jeweils eingerichtet sein, eine Identifizierung von Personen basierend auf Identifikationsdokumenten zu initiieren. So kann bspw. die Datenerfassungsvorrichtung 204a Mittel zum Erfassen von auf dem Identifikationsdokument hinterlegten Informationen sowie Mittel zum Erfassen mindestens eines Merkmals der Person 206 umfassen. Zudem stellt die Datenerfassungsvorrichtung 204a eine Benutzeroberfläche zur Eingabe eines Prüfprotokolls bereit. Die Datenerfassungsvorrichtung 204a kann ferner zum Übertragen der hinterlegten Informationen, des mindestens einen Merkmals der Person 206 und des Prüfprotokolls über den Kommunikationskanal an die Zentraleinheit 202 eingerichtet sein. Auch wenn die Datenerfassungsvorrichtung 204a beispielhaft genannt ist, sollte verständlich sein, dass jede aus der Vielzahl von Datenerfassungsvorrichtungen 204a, 204b, 204c, ... 204n dieselbe oder eine ähnliche Konfiguration aufweisen kann, um die Identifizierung von Personen zu initiieren.

Sämtliche von den Datenerfassungsvorrichtungen 204a, 204b, 204c, ... 204n erfassten Daten können an die Zentraleinheit 202 kommuniziert werden, welche zentral die Identifizierung von einer Mehrzahl von Personen durchführen kann. Dies kann ein Prüfen der auf Identifikationsdokumenten hinterlegten Informationen, von Merkmalen der zu identifizierenden Personen, bspw. der Person 206, und der jeweiligen Prüfprotokolle umfassen, um jeweilige Prüfergebnisse mit Vertrauenswerten zu erhalten. Falls ein Vertrauenswert unterhalb eines vorgegebenen Schwellwerts liegt, wird eine Verifizierung des jeweiligen Prüfergebnisses initiiert.

Die Zentraleinheit 202 kann ferner die Prüfergebnisse an Endvorrichtungen kommunizieren. Diese können bspw. den zu identifizierenden Personen zugeordnet sein. So kann bspw. Endvorrichtung 208 der Person 206 zugeordnet sein.

Die Datenerfassungsvorrichtungen 204a, 204b, 204c, ... 204n können verschiedene Arten von Sensoren und Erfassungsgeräten umfassen, wie z.B. Dokumentenprüfgeräte zum Einlesen des Identifikationsdokuments und Kameras zum Erfassen von Bildern oder Videoaufnahmen der Person 206. Diese Erfassungsgeräte können auch biometrische Merkmale der Person 206, wie Fingerabdrücke oder Retina-Scans, erfassen.

Eine oder mehrere der Datenerfassungsvorrichtungen 204a, 204b, 204c, ... 204n können Benutzeroberflächen mit interaktiven Elementen zum Einlesen der Prüfprotokolle bereitstellen, welche Angaben zur Zulässigkeit des Identifikationsdokuments, zur zeitlichen Gültigkeit des Identifikationsdokuments, zur Eignung des Identifikationsdokuments oder zum Oberflächenzustand des Identifikationsdokuments aufweisen können. Prüfprotokolle können ferner Angaben zur Person, wie die Erfassungsgüte von Merkmalen, zusätzliche Identifikationsmerkmale der Person 206 oder Bewertungsparameter, umfassen.

Die Zentraleinheit 202 kann mindestens eine weitere Eingabe/Ausgabe-Schnittstelle zum Bereitstellen einer weiteren Benutzeroberfläche für das Verifizieren des Prüfergebnisses umfassen. Diese weitere Benutzerschnittstelle kann interaktive Elemente zum Bereitstellen des Prüfergebnisses, der übertragenen Informationen, des mindestens einen Merkmals der Person 206 und/oder des Prüfprotokolls oder zur Eingabe von Verifizierungsparametern aufweisen. Die Zentraleinheit 202 kann auch zum Authentifizieren eines Benutzers der Zentraleinheit eingerichtet sein, um die Verifizierung zu initiieren.

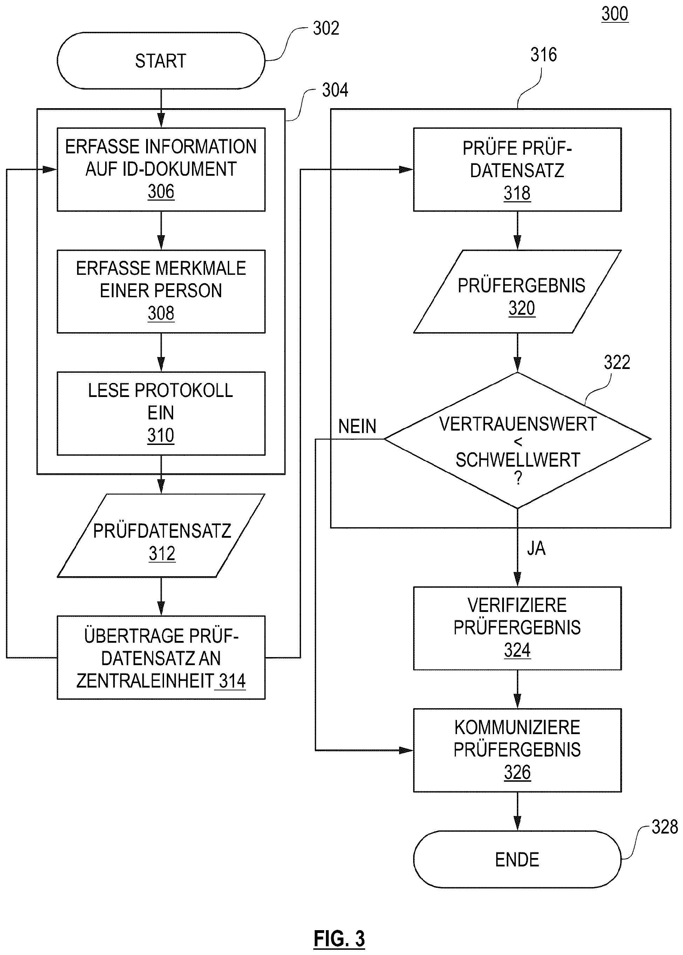

Figur 3 zeigt ein Flussdiagramm eines Identifizierungsverfahrens 300. Das Verfahren 300 beginnt mit Startpunkt 302. Das Verfahren 300 kann ein hybrides Identifizierungsverfahren sein, das in einem System mit einer Zentraleinheit und mindestens einer Datenerfassungsvorrichtung durchgeführt werden kann, bspw. Systems 100 und 200 aus Figur 1 bzw. 2. Entsprechend kann das Verfahren 300 vorsehen, dass eine Zentraleinheit und eine (davon) örtlich getrennte oder räumlich beabstandete (mindestens eine) Datenerfassungsvorrichtung bereitgestellt werden, wobei die Datenerfassungsvorrichtung an die Zentraleinheit über einen vorzugsweise gesicherten Kommunikationskanal angebunden ist.

In einer Vielzahl von Anwendungsfeldern ist eine zuverlässige initiale Identifizierung von Personen essentiell, da eine sichere Zuordnung zwischen einer natürlichen Person und einer digitalen Identität gewährleistet sein muss. Hierbei legt eine Person ein Identifikationsdokument vor, welches auf Echtheit und Unverfälschtheit überprüft werden muss. Ferner wird ein Abgleich zwischen der Person und dem Identifikationsdokument durchgeführt. Vorteilhafterweise kann gemäß Ausführungsformen dieser Prozess dezentral in der Fläche durchgeführt werden. Hierbei kann der Abgleich zwischen Person und Identifikationsdokument über (biometrische) Merkmale der Person (insbesondere einen Lichtbildabgleich) erfolgen, um eine hohe Zuverlässigkeit mit Schutz vor gezielten Manipulationen zu erreichen. Eine Durchführung an der Datenerfassungsvorrichtung setzt jedoch keine erkennungsdienstliche Expertise oder Übung bei den Durchführenden vor und der Prozess kann aus Sicht der Nutzenden und der Durchführenden schnell und einfach durchlaufen werden.

Das Verfahren kann zunächst mit Block 304 beginnen. In Block 304 kann eine Identifizierung einer Person durch die Datenerfassungsvorrichtung basierend auf einem Identifikationsdokument der Person initiiert werden. Block 304 kann Schritt 306 umfassen, in dem die Datenerfassungsvorrichtung (oder eine entsprechend eingerichtete Komponente) Informationen erfassen kann, die auf dem Identifikationsdokument hinterlegt sind. In Schritt 308 wird mindestens ein Merkmal der Person erfasst. Diese Merkmale können biometrische Daten wie Fingerabdrücke, Gesichtsbilder oder Retina-Scans umfassen. Nach dem Erfassen der Merkmale liest die Datenerfassungsvorrichtung in Schritt 310 ein Prüfprotokoll ein. Die Schritte 306, 308 und 310 können zur Erstellung eines Prüfdatensatzes 312 führen. Der Prüfdatensatz 312 kann die erfassten Informationen des Identifikationsdokuments (aus Schritt 306), die Merkmale der Person (aus Schritt 308) und das Prüfprotokoll (aus Schritt 310) aufweisen.

Der Prüfdatensatz kann in Schritt 314 an die Zentraleinheit übertragen werden. Diese Übertragung erfolgt über einen vorzugsweise gesicherten Kommunikationskanal, um die Integrität und Sicherheit der Daten zu gewährleisten. Nachfolgend kann die Datenerfassungsvorrichtung ein Prüfergebnis der Zentraleinheit abwarten. Alternativ kann eine erneute Verarbeitung von Block 304 aufgenommen werden, sodass die Datenerfassungsvorrichtung mit der Erzeugung eines weiteren Prüfdatensatzes für eine weitere Person fortfahren kann.

In einer beispielweisen Implementierung der Schritte 304 bis 314 des hybriden Identifizierungsverfahrens kann eine durchführende Person, welche auch als ein Laie bezeichnet werden kann, vor Ort an der Datenerfassungsvorrichtung, beispielsweise mittels eines Dokumentenprüfgeräts und einer Webcam zuverlässige Daten der zu identifizierenden Person erheben und kann dabei durch einen interaktiven Prozess-Flow angeleitet werden, den die Datenerfassungsvorrichtung bereitstellen kann. Die Datenerfassungsvorrichtung kann hierzu das Dokumentenprüfgerät, die Webcam, und beispielsweise ein Tablet mit interaktivem Prozess-Flow, der die Verfahrensschritte anleitet und dokumentiert, aufweisen. Es sollte jedoch verständlich sein, dass auch andere Komponenten, bspw. Komponenten zur Erfassung der Merkmale der Person und des Identifikationsdokuments und/oder andere oder weitere Eingabe/Ausgabe-Schnittstellen als das erwähnte Tablet, vorgesehen sein können. Die vorgenannten Komponenten können über den gesicherten Kommunikationskanal an die Zentraleinheit, welche auch als Backend bezeichnet werden kann, sicher angebunden sein.

Gemäß Prozess-Flow kann geprüft werden, ob ein geeignetes Identifikationsdokument vorliegt, ob also beispielsweise der Dokumententyp zulässig ist, eine zeitliche Gültigkeit gegeben ist, dass die Oberfläche des Identifikationsdokuments nicht verschmutzt ist, und dergleichen. Diese Prüfschritte können automatisiert durchgeführt oder in einem semi-automatischen Prozess computerbasiert begleitet werden, indem die Datenerfassungsvorrichtung entsprechende Werte generiert und dem Laien zur Verfügung stellt. Dies kann im Prüfprotokoll dokumentiert und bspw. durch den Laien zusätzlich bestätigt werden, falls im Prozess-Flow eine Interaktion des Laien vorgesehen ist.

Gemäß dem Prozess-Flow kann geprüft werden, ob die Person für die Identifizierung geeignet ist, ob bspw. das Gesicht nicht bedeckt ist und dass keine Maskierung der Person oder ähnliches vorzufinden ist. Ferner kann ein Abgleich mit vorhandenen Daten in einer vorliegenden Datenbank durchgeführt werden, welcher nicht bei der Identifizierung genutzt werden muss, sondern eine Zusatzinformation zur Qualitätssicherung darstellen kann. Diese Prüfschritte können automatisiert durchgeführt oder durch einem semi-automatischen Prozess computerbasiert gestützt werden, indem die Datenerfassungsvorrichtung durch spezialisierte Komponenten Werte generiert und dem Laien zur Verfügung stellt. Dies kann im Prüfprotokoll dokumentiert und bspw. durch den Laien zusätzlich bestätigt werden, falls im Prozess-Flow eine Interaktion des Laien vorgesehen ist.

Gemäß dem Prozess-Flow kann an der Datenerfassungsvorrichtung ein initialer Lichtbildabgleich durchführt werden. Dieser dient nicht der eigentlichen Identifizierung, sondern dem Abbruch der Identifizierung bei einer offensichtlichen Nichtübereinstimmung zwischen der Person und den Bilddaten auf dem Identifikationsdokument. Dieser Prüfschritt kann automatisiert durchgeführt oder durch einen semi-automatischen Prozess computerbasiert gestützt werden, indem die Datenerfassungsvorrichtung durch spezialisierte Komponenten entsprechende Werte generiert und dem Laien zur Verfügung stellt. Dies kann im Prüfprotokoll dokumentiert und bspw. durch den Laien zusätzlich bestätigt werden, falls im Prozess-Flow eine Interaktion des Laien vorgesehen ist.

Der Prozess-Flow kann nach Durchführung der vorstehenden Schritte eine Rückmeldung durch den Laien vorsehen. Der Laie (oder eine Schnittstelle der Identifikationsvorrichtung) kann eine Rückmeldung über die Prüfergebnisse an die zu identifizierende Person durchgeben und die nächsten Schritte erläutern. So kann bei einem negativen Ergebnis der vorgenannten Prüfschritte der Prozess abgebrochen werden. Vorzugsweise kann auch in einem solchen Fall der Prüfdatensatz entsprechend vervollständigt und an die Zentraleinheit übermittelt werden. Bei einem positiven Ergebnis der vorgenannten Prüfschritte kann der Prozess fortgeführt werden. Es sollte verständlich sein, dass dieser Schritt vollautomatisch durchgeführt werden kann, falls keine Interaktion durch den Laien vorgesehen ist. In diesem Fall kann die Mitteilung an die Person und die Aufklärung über die nächsten Schritte auch bspw. eine Benutzerschnittstelle der Datenerfassungsvorrichtung erfolgen.

Eine Prüfung des Identifikationsdokuments erfolgt durch die Datenerfassungsvorrichtung in Schritt 306, indem bspw. ein Chip oder ein sonstiger Speicher auf dem Identifikationsdokument ausgelesen werden. Ferner können in Schritt 308 eine oder mehrere Fotografien oder Videosequenzen der Person mittels der Webcam oder einer anderen Kamera angefertigt werden. Auch hier kann im Prozess-Flow vorgesehen sein, dass der Laie begleitende Umstände dokumentieren und/oder bestätigt, ob die Prüfung wie vorgesehen abgelaufen ist, bspw. ob das Gesicht der Person nicht verdeckt wurde oder keine offensichtlichen Manipulationsversuche stattgefunden haben. Alternativ oder zusätzlich kann eine solche Bestätigung auch durch ein weiteres automatisiertes System erfolgen, welches die Verarbeitung der Schritte 306 und 308 überwacht.

Die erfassten Daten können in den Prüfdatensatz 312 einfließen, der an die Zentraleinheit oder das Backend übertragen werden kann, in der eine (semi-)automatische Identifizierung der Person stattfinden kann.

Die Zentraleinheit kann als ein System zur automatisierten Identitätsprüfung auf Basis des Prüfdatensatzes ausgestaltet sein, welche mit hohen Schwellwerten (niedrige Quote an "falsch-positiven" Identifizierungen) arbeiten kann, sowohl für eine Prüfung der Identifikationsdokumente als auch für einen Abgleich der (biometrischen) Merkmale der zu identifizierenden Person. Ferner kann die Zentraleinheit ein System zur manuellen Identitätsprüfung auf Basis der erhobenen Daten (Prüfdatensatz) durch Spezialisten aufweisen, optional sowohl für die Prüfung der Identifikationsdokumente als auch für den Abgleich der Merkmale.

Die Schwellwerte können beispielsweise so eingestellt werden, dass eine Falsch-Positiv-Rate im Bereich von 1:10000 erreicht wird. Dies kann ermittelt werden, indem bspw. Foto und Vergleichsperson zufällig gewählt und miteinander abgeglichen werden. Die Falsch-Negativ-Rate könnte gleichzeitig kleiner als 2:100 sein.

Sofern manuelle Interaktion erforderlich ist, können Handelnde an der Zentraleinheit bspw. Spezialisten für biometrischen Abgleich von Gesichtsbildern und Interpretation der vom Dokumentenprüfgerät übermittelten Daten sein. Es sollte aber verständlich sein, dass die Verarbeitung an der Zentraleinheit auch vollautomatisch erfolgen kann und manuelle Interaktion lediglich zur Bestätigung der ermittelten Ergebnisse verwendet werden kann.

Gemäß Verfahren 300 kann die Zentraleinheit den Prüfdatensatz empfangen und als Reaktion darauf die Identifizierung der Person in Block 316 durchführen. Die Verarbeitung in Block 316 kann zunächst ein Prüfen des Prüfdatensatzes im Schritt 318 aufweisen. Schritt 318 kann ein Prüfen der hinterlegten Informationen, der Merkmale der Person und/oder des Prüfprotokolls aufweisen, um ein Prüfergebnis 320 zu generieren. Das Prüfergebnis 320 weist mindestens einen Vertrauenswert auf. Im Schritt 322 wird bestimmt, ob der mindestens eine Vertrauenswert des Prüfergebnisses 320 unterhalb eines vorgegebenen Schwellwerts liegt. Wenn der Vertrauenswert den Schwellwert unterschreitet, wird davon ausgegangen, dass Kriterien einer Identifizierung hoher Güte nicht erfüllt sind, und im Schritt 324 wird eine Verifizierung des Prüfergebnisses 320 durchgeführt. Die Verifizierung kann zusätzliche Überprüfungen umfassen, um die Richtigkeit des Prüfergebnisses 320 sicherzustellen.

Nach der Verifizierung 324 oder wenn der Vertrauenswert den Schwellwert überschreitet (und daher Kriterien einer Identifizierung hoher Güte erfüllt sind), wird das Prüfergebnis im Schritt 326 kommuniziert. Diese Kommunikation kann vorzugsweise an eine Endvorrichtung erfolgen. Diese kann der zu identifizierenden Person zugeordnet sein. Schritt 326 kann zeitversetzt durchgeführt werden. Ferner kann Schritt 326 im Positivfall verwendet werden, um der Person eine digitale Identität zuzuordnen. Die digitale Identität kann eine neue oder eine in einer Datenbank bereits bestehende digitale Identität sein.

Anhand einer beispielhaften Implementierung des Verfahrens 300 auf der Zentraleinheit kann im Backend eine semi-automatisierte Identitätsprüfung stattfinden. Hierzu sollte die Zentraleinheit hohe Auflagen erfüllen, die von der Betriebsumgebung, den Systemen und den Personen mit Zugang auf die Zentraleinheit erfüllt sein müssen. Die Schwellwerte des automatisierten Systems können anpassbar sein, um eine hohe Zuverlässigkeit sicherzustellen. So können die Schwellwerte mit einer sehr geringen Akzeptanz für falsch positiven Ergebnisse eingestellt sein, was eine erhöhte False-Negative-Rate nach sich ziehen kann. Dies kann eine Nachbehandlung uneindeutiger Fälle (Vertrauenswert unter Schwellwert) in Schritt 324 erfordern. Dieser Fallback-Mechanismus kann eine manuelle Vor-Ort-Nachbehandlung durch geeignete Spezialisten erfordern. Ferner kann Schritt 324 durch spezialisierte Systeme automatisch durchgeführt werden.

Ähnlich zur Verarbeitung in der Datenerfassungsvorrichtung kann die Zentraleinheit nach Schritt 326 mit dem Empfang weitere Prüfdatensätze fortfahren, wodurch die Verarbeitung in Block 316 getriggert wird. Ferner kann die Zentraleinheit derart ausgelegt sein, dass Prüfungen einzelner Datensätze nebenläufig stattfinden.

Das Verfahren 300 kann bei Schritt 328 enden.

Die in der vorstehenden Beschreibung, den Ansprüchen und Figuren offenbarten Merkmale können sowohl einzeln als auch in beliebiger Kombination für die Verwirklichung der Erfindung in ihren verschiedenen Ausführungsformen von Bedeutung sein.

**LISTE DER BEZUGSZEICHEN**

| | |
|---|---|
| System | 100 |
| Zentraleinheit | 102 |
| Datenerfassungsvorrichtung | 104 |
| Kommunikationskanal | 106 |
| Person | 108 |
| Identifikationsdokument | 110 |
| Benutzeroberfläche | 112 |
| Endvorrichtung | 114 |
| Dokumentenprüfgerät | 116 |
| System | 200 |
| Zentraleinheit | 202 |
| Datenerfassungsvorrichtung(en) | 204 |
| zu identifizierende Person | 206 |
| Endvorrichtung | 208 |
| Identifizierungsverfahren | 300 |
| Start | 302 |
| Initiiere Identifizierung | 304 |
| Erfasse Informationen | 306 |
| Erfasse Merkmal | 308 |
| Lesen Protokoll ein | 310 |
| Prüfdatensatz | 312 |
| Übertrage Prüfdatensatz | 314 |
| Prüfe Prüfdatensatz | 316 |
| Prüfergebnis | 318 |
| Bestimme, ob Vertrauenswert kleiner als Schwellenwert ist | 320 |
| Verifiziere Prüfergebnis | 322 |
| Kommuniziere Prüfergebnis | 326 |
| Ende | 328 |

## Patentansprüche

1. Identifizierungsverfahren, das folgende Schritte umfasst:
Bereitstellen einer Zentraleinheit und einer örtlich getrennten Datenerfassungsvorrichtung, wobei die Datenerfassungsvorrichtung an die Zentraleinheit über einen vorzugsweise gesicherten Kommunikationskanal angebunden ist;
Initiieren (304) einer Identifizierung einer Person durch die Datenerfassungsvorrichtung basierend auf einem Identifikationsdokument, das der Person zugeordnet ist, umfassend:
Erfassen (306) von auf dem Identifikationsdokument hinterlegten Informationen durch die Datenerfassungsvorrichtung,
Erfassen (308) mindestens eines Merkmals der Person durch die Datenerfassungsvorrichtung und
Bereitstellen einer Benutzeroberfläche zur Eingabe eines Prüfprotokolls;
Übertragen (314) der hinterlegten Informationen, des mindestens einen Merkmals der Person und des Prüfprotokolls über den Kommunikationskanal an die Zentraleinheit;
Durchführen (316) der Identifizierung der Person durch die Zentraleinheit, umfassend:
Prüfen (318) der hinterlegten Informationen, des mindestens einen Merkmals der Person und des Prüfprotokolls, um ein Prüfergebnis mit einem Vertrauenswert zu erhalten und
falls der Vertrauenswert unterhalb eines vorgegebenen Schwellwerts liegt (322), Initiieren (324) einer Verifizierung des Prüfergebnisses; und
Kommunizieren (326) des Prüfergebnisses an eine Endvorrichtung.

2. Verfahren nach Anspruch 1, wobei das Prüfen durch die Zentraleinheit ein Prüfen der hinterlegten Informationen, des mindestens einen Merkmals der Person und des Prüfprotokolls unter Verwendung von einem oder mehreren Schwellwerten umfasst.

3. Verfahren nach Anspruch 2, das ferner ein Anpassen des einen oder der mehreren Schwellwerte umfasst.

4. Verfahren nach Anspruch 3, das ferner ein Erfassen von Leistungsmetriken umfasst, wobei das Anpassen des einen oder der mehreren Schwellwerte ein Anpassen des einen oder der mehreren Schwellwerte auf der Grundlage der erfassten Leistungsmetriken, insbesondere einer False-Positive Rate und einer False-Negative Rate, aufweist.

5. Verfahren nach einem der vorhergehenden Ansprüche, wobei die Datenerfassungsvorrichtung ein Dokumentenprüfgerät zum Einlesen des Identifikationsdokuments umfasst.

6. Verfahren nach einem der vorhergehenden Ansprüche, wobei die Datenerfassungsvorrichtung mindestens eine Kamera zum Erfassen des mindestens einen Merkmals der Person umfasst.

7. Verfahren nach einem der vorhergehenden Ansprüche, wobei das mindestens eine Merkmal der Person mindestens ein Bild oder eine Videoaufnahme der Person aufweist.

8. Verfahren nach einem der vorhergehenden Ansprüche, wobei das mindestens eine Merkmal der Personen mindestens ein biometrisches Merkmal der Person, vorzugsweise ein biometrisches Bild, einen Fingerabdruck, oder einen Retina-Scan, aufweist.

9. Verfahren nach einem der vorhergehenden Ansprüche, wobei die Datenerfassungsvorrichtung mindestens eine Eingabe/Ausgabe-Schnittstelle zum Bereitstellen der Benutzeroberfläche umfasst, wobei die Benutzeroberfläche interaktive Elemente zur Eingabe des Prüfprotokolls aufweist.

10. Verfahren nach einem der vorhergehenden Ansprüchen, wobei die Zentraleinheit mindestens eine weitere Eingabe/Ausgabe-Schnittstelle zum Bereitstellen einer weiteren Benutzeroberfläche für das Verifizieren des Prüfergebnisses umfasst, wobei die weitere Benutzerschnittstelle interaktive Elemente zum Bereitstellen des Prüfergebnisses, der übertragenen Informationen, des mindestens einen Merkmals der Person und des Prüfprotokoll, oder zur Eingabe von Verifizierungsparametern aufweist.

11. Verfahren nach einem der vorhergehenden Ansprüchen, wobei das Prüfprotokoll eine oder mehrere Angaben aufweist, wobei die eine oder mehreren Angaben eines oder mehrere aus Zulässigkeit des Identifikationsdokuments, zeitliche Gültigkeit des Identifikationsdokuments, Eignung des Identifikationsdokuments oder Oberflächenzustand des Identifikationsdokuments aufweisen.

12. Verfahren nach einem der vorhergehenden Ansprüchen, wobei das Prüfprotokoll ferner eine oder mehrere Angaben zur Person aufweist, wobei die eine oder mehreren Angaben zur Person eines oder mehrere aus Erfassungsgüte des mindestens einen biometrischen Merkmals, zusätzliche Identifikationsmerkmale der Person oder Bewertungsparameter aufweisen.

13. Verfahren nach einem der vorhergehenden Ansprüchen, das ferner ein Authentifizieren eines Benutzers der Zentraleinheit umfasst.

14. Vorrichtung, die zum Ausführen des Verfahrens nach einem der vorhergehenden Ansprüche eingerichtet ist.

15. System zum Durchführen einer verteilten Identifizierung, das Folgendes umfasst:
eine Zentraleinheit (202);
eine Vielzahl von Datenerfassungsvorrichtungen (204a, ..., 204n), welche von der Zentraleinheit (202) örtlich getrennt sind und jeweils an die Zentraleinheit (202) über einen vorzugsweise gesicherten Kommunikationskanal angebunden sind; und mindestens eine Endvorrichtung (208),
wobei eine Datenerfassungsvorrichtung (204a) aus der Vielzahl von Datenerfassungsvorrichtungen (204a, ..., 204n) zum Initiieren einer Identifizierung der Person (206) basierend auf einem Identifikationsdokument eingerichtet ist, das der Person (206) zugeordnet ist, umfassend:
Erfassen von auf dem Identifikationsdokument hinterlegten Informationen durch die Datenerfassungsvorrichtung,
Erfassen mindestens eines Merkmals der Person (206) durch die Datenerfassungsvorrichtung und
Bereitstellen einer Benutzeroberfläche zur Eingabe eines Prüfprotokolls; und wobei die Datenerfassungsvorrichtung (204a) ferner zum Übertragen der hinterlegten Informationen, des mindestens einen Merkmals der Person (206) und des Prüfprotokolls über den Kommunikationskanal an die Zentraleinheit (202) eingerichtet ist;
wobei die Zentraleinheit (202) zum Durchführen der Identifizierung der Person (206) eingerichtet ist, umfassend:
Prüfen der hinterlegten Informationen, des mindestens einen Merkmals der Person (206) und des Prüfprotokolls, um ein Prüfergebnis mit einem Vertrauenswert zu erhalten und
falls der Vertrauenswert unterhalb eines vorgegebenen Schwellwerts liegt, Initiieren einer Verifizierung des Prüfergebnisses; und
wobei die Zentraleinheit (202) ferner zum Kommunizieren des Prüfergebnisses an die mindestens eine Endvorrichtung (208) eingerichtet ist.
